# EUROPEAN PATENT SPECIFICATION

(11) **EP 0 701 365 B1**
(45) Date of publication and mention of the grant of the patent: **28.06.2000**
(21) Application number: 95112346.2
(22) Date of filing: 05.08.1995
(51) Int. Cl.: H04N 5/44, H04N 5/782

(54) **Method for programming a receiver of television programmes**
Verfahren zum Programmieren eines Empfängers von Fernsehprogrammen
Procédé pour programmer un récepteur d'émissions de télévision

(30) Priority: 17.08.1994 GB 9416634
(43) Date of publication of application: 13.03.1996
(73) Proprietor: THOMSON multimedia, 92648 Boulogne Cédex (FR)
(72) Inventor: Tan, Boon Tsong, Singapore 1545 (SG); Chang, Chiew Mun, 03-804, Singapore 520106 (SG)
(74) Representative: Wördemann, Hermes, Dipl.-Ing.

(56) References cited:
- EP-A- 0 577 283
- WO-A-91/19391
- GB-A- 2 256 333
- US-A- 5 307 173

## Description

The invention relates to a method to set the broadcast channel on a device according to the introductory part of claim 1.

Referring to prior art, the user is required to:
1) read through a long list of instructions in the manual
2) look at a long list of SHOWVIEW numbers (3-digit)
3) complete the mapping table
4) enter the long list of numbers into the VCR
before he can use the SHOWVIEW for timer recording. This is very tedious and prone to errors. The user does not generally understand what he is doing and gets confused.

Such a prior art channel mapping is described in EP-A-0577283.

It is an object of the invention to simplify said attachment process between the 3 digit SHOWVIEW number to the program places of the device and thereby to make it more convenient for the user.

The invention relates to a method for programming a broadcast receiver for system wherein each broadcast is provided with an identification signal transmitted during the broadcast and including a code number for said broadcast emitting transmitter station.

The invention is characterized by the steps recited in claim 1.

An alternative method is claimed in claim 5.

Within the invention the already programmed device like a video recorder is used for performing the desired attachment between the 3 digit SHOWVIEW number and the program places of the device. Programming means an attachment or a concordance between a defined transmitter station like ARD, ZDF to an elected program place number 1, 2, 3....Thereby it is no more necessary to enter the 3 digit show view number as the equipment automatically evaluates said number for establishing the concordance between said number and the associated program place. So said programming process becomes much more convenient for the user.

Separately said broadcast is displayed on the screen of a television receiver so that the user can look at the screen and detect, if the picture displayed on the screen corresponds to the picture belonging to said entered identification signal. Said broadcast receiver separately is a video recorder. Said attaching process preferably is performed automatically by pushing a button after the receiver has started to display said selected broadcast.

A control unit for performing said method includes keyboard means for entering said identification signal,
control means for tuning said device to different transmitter stations and
control means for establishing said attachment between said code number and said program place of the device.

According to a further embodiment of the invention, it can be used for programming a non-programmed device like a video recorder, that means establishing the attachment or concordance between the program places number 1, 2, 3... at the receiver to the different transmitter stations like ARD, ZDF....This embodiment of the invention works in the following way.

For the first, the receiver like a video recorder is not programmed. That means the attachment between the program places number 1, 2, 3... at the receiver like a video recorder and the transmitter station which can be received at the place of the receiver like ARD, ZDF is not yet made.

For establishing said programming, in the first step the user enters the complete SHOWVIEW number having for example 9 digits into a keyboard of the equipment. In a second step the video recorder which is not programmed starts an electronic tuning control (ETC process). That means, for example, it automatically tunes the receiver to different stations and stops tuning when a receivable station is reached. The user looks at the screen of the television receiver. After one or more tuning processes the screen will show just said broadcast which corresponds to the broadcast which is defined by the SHOWVIEW number which was entered at the beginning. Now the user can make the programming process, that means, for example, attaching the transmitter station which just transmits said broadcast to a desired program place, for example program place number 5.

By this procedure there is made simultaneously the programming of a non-programmed video recorder to different transmitter stations and additionally the attachment between said code number for a defined transmitter station and the program place of the receiver.

In order that the invention may more readily be understood, a description is now given by means of examples, reference being made to the drawing showing two circuits according to the present invention.

In the drawing:
- Fig.1 - 3: shows prior art mapping pages appears on the television (TV) screen.
- Fig.4 - 8: shows mapping pages appears on the TV screen.

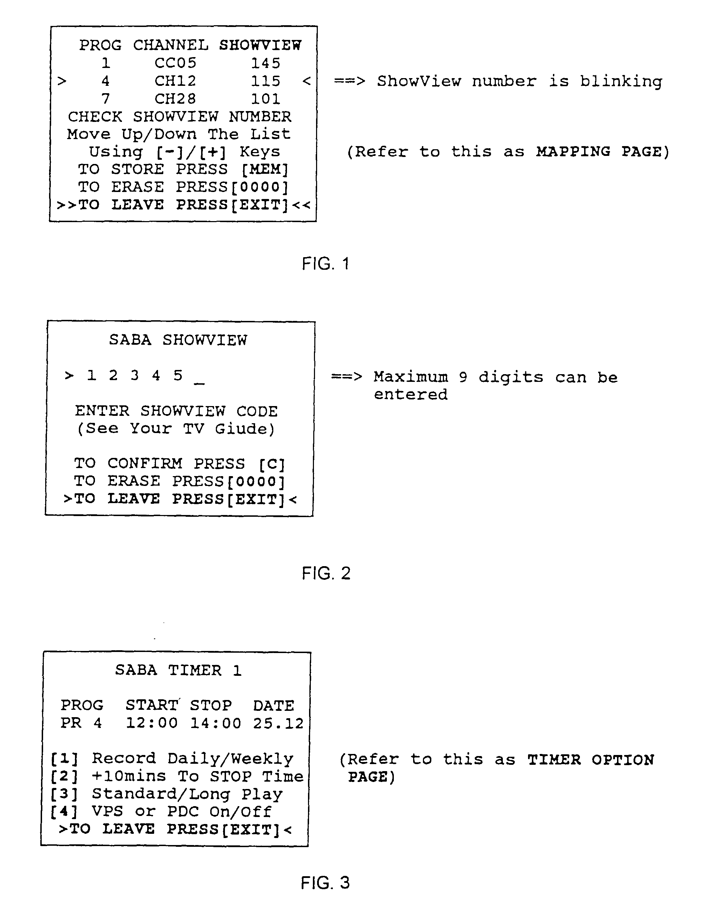

Fig. 1 shows how to map a page appears on the TV screen. It shows the program number PROG, the broadcast channel CHANNEL, the SHOWVIEW number SHOWVIEW (is blinking) and the orders that can be done.

Assuming that the user completes entering all the SHOWVIEW numbers in the mapping page. After that he can now perform SHOWVIEW programming.

Fig. 2 shows how the SHOWVIEW programming look on the screen. It can be entered a Maximum 9 digits code. Once pressed [C] key on the remote control of the VCR to confirm, the VCR software will decode the number 12345 to the SHOWVIEW channel SV115. Since SV115 is mapped to Program PR 4.

Fig. 3 shows the timer option page according to Fig. 2. It can choose the options 1 to 4 and press the [EXIT] key when it is done.

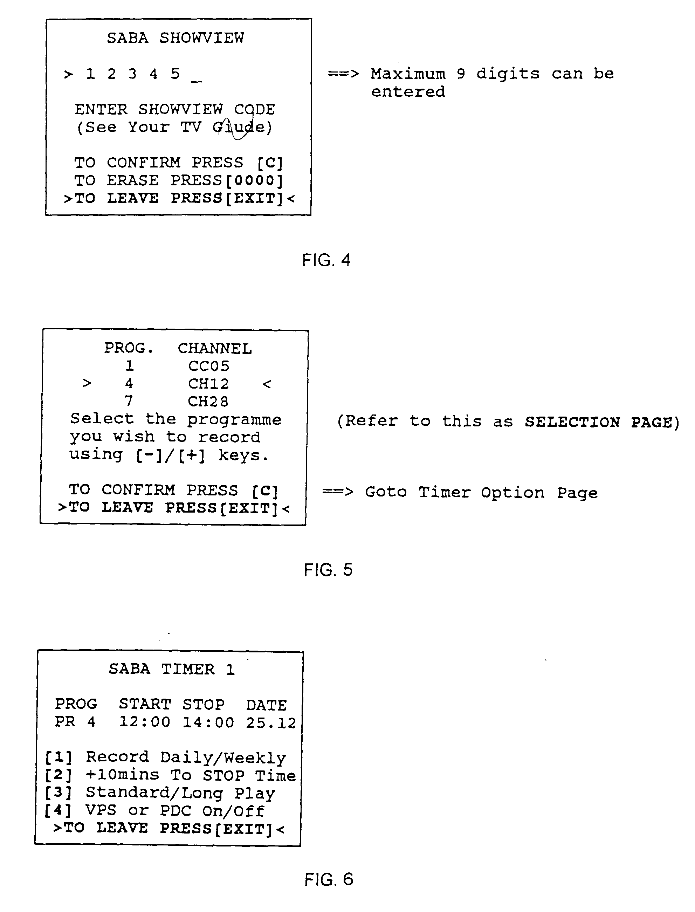

Fig. 4 shows the new auto mapping TV screen. The user can skip all the long procedures as mention in Fig. 1. Now the user goes straight to SHOWVIEW programming. He enters the SHOWVIEW code. When he press [C], the video recorder (VCR) decodes 12345 to SHOWVIEW channel SV115. Then the VCR checks and discovers that this SHOWVIEW channel SV115 is not mapped.

Fig. 5 shows that the VCR then prompts the user to identify which program he wishes to record. This picture on the TV screen is in mix mode. That means, the TV program is shown on the background behind the text. The user uses the [-] or [+] keys on the remote control to scroll through the list of channels to find the program he wants to record. Then he presses [C] key to confirm. The VCR will automatically map SV115 to the program he selected (e.g. PR 4).

Fig. 6 shows the screen which follows after the confirmation. Thus the user can get to the same stage by simply selecting the program he wants to record, instead of spending many minutes filling up tables and keying in a list of numbers into the VCR. He does not need to know SHOWVIEW number refers to what TV program. The next time he enters a SHOWVIEW code for this SHOWVIEW channel SV115 again, he will go directly to the TIMER OPTION PAGE ( Fig. 6) because SV115 has already been mapped to program 4 PR 4.

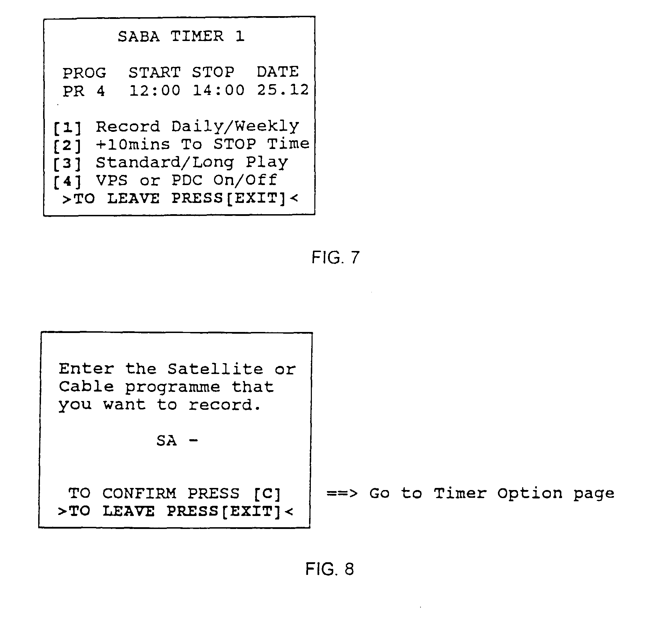

Fig. 7 shows the re-assigning mapping. If the user has somehow selected the wrong program in the selection page, he needs to re-map. He can do this from the TIMER OPTION PAGE (Fig. 6). At this point, he presses the [-] key to move the cursor back to program PROG entry. He then changes program 4 PR 4 to PR05 and the exit. The VCR will automatically re-map SV115 to PR05.

A second solution is if the user puts another TV channel into program 4 PR 4, that means, instead of program 4 PR 4 channel 12, he overwrites program 4 PR 4 with channel CH 33. In this case, the VCR will prompt him with the SELECTION PAGE again when he uses SHOWVIEW.

Fig. 8 shows the satellite mapping. For mapping of SHOWVIEW numbers to satellite program numbers (NOT VCR program numbers), the concept of auto mapping is unchanged, except that the selection pages are slightly different. This page is in mix mode. The user has to enter the satellite program which he wants to record. If he does not know what program number, he can switch the channels on his satellite receiver and the picture in the background will change. Once he has found the correct program, enter that number into the VCR. The VCR will automatically map the SHOWVIEW number to this satellite program number.

In conclusion, it can be seen that now, the user is never exposed to the 3 digit SHOWVIEW number at all. He need not know what the SHOWVIEW number represents. All he need to know basically is which program he wants to record. All the confusing tedious preparations just to use SHOWVIEW is eliminated.

All references to "SHOWVIEW" will include VideoPlus+ and G-Code as well.

## Claims

1. Method for programming a broadcast receiver for a system wherein each broadcast is provided with an identification signal transmitted during the broadcast and including a code number for said broadcast emitting transmitter station,
**characterized by** the following steps:
a) entering the identification signal for an elected broadcast of a defined transmitter station,
b) decoding said identification signal to said code number
c) tuning said receiver until it receives and displays a broadcast of said defined transmitter station at a defined tuning program place,
d) attaching said code number of the selected transmitter station to said defined program place.

2. Method according to claim 1, **characterized in that** said broadcast is displayed on the screen of a television receiver.

3. Method according to claim 1, **characterized in that** said broadcast receiver is a video recorder.

4. Method according to claim 1, **characterized in that** said attaching process is performed automatically by pushing a button after the receiver has started to display said elected broadcast.

5. Method for programming a non-programmed receiver to different transmitter stations, **characterized by** the following steps:
a) entering an identification signal for a broadcast of a defined transmitter station,
b) tuning said receiver across the received frequency band,
c) detecting, if the received and displayed broadcast corresponds to the broadcast of said defined transmitter,
d) programming a desired program place of the receiver to said defined transmitter and attaching the code number included in said identification signal to said program place.

6. Method according to claim 5, **characterized in that** said tuning process is an electronic tuning control (ETC) process.

## Patentansprüche

1. Verfahren zum Programmieren eines Rundfunkempfängers für ein System, in dem jede Sendung mit einem Kennsignal versehen ist, das während der Sendung übertragen wird und eine Kodezahl für die die Sendung aussendende Sendeanstalt enthält, gekennzeichnet durch die folgenden Schritte:
a) Eingeben des Kennsignals für eine ausgewählte Sendung einer bestimmten Sendeanstalt,
b) Dekodieren des Kennsignals zu der Kodezahl,
c) Abstimmen des Empfängers, bis er eine Sendung der bestimmten Sendeanstalt bei einem bestimmten Abstimm-Programmplatz empfängt und wiedergibt,
d) Zuordnen der Kodezahl der ausgewählten Sendeanstalt zu dem bestimmten Programmplatz.

2. Verfahren nach Anspruch 1, dadurch gekennzeichnet, daß die Sendung auf dem Bildschirm eines Fernsehempfängers wiedergegeben wird.

3. Verfahren nach Anspruch 1, dadurch gekennzeichnet, daß der Rundfunkempfänger ein Videorekorder ist.

4. Verfahren nach Anspruch 1, dadurch gekennzeichnet, daß der Zuordnungsvorgang automatisch durch Drücken eines Knopfes erfolgt, nachdem der Empfänger mit der Wiedergabe der ausgewählten Sendung begonnen hat.

5. Verfahren zum Programmieren eines nicht-programmierten Empfängers auf verschiedene Sendeanstalten, gekennzeichnet durch die folgenden Schritte:
a) Eingabe eines Kennsignals für eine Sendung einer bestimmten Sendeanstalt,
b) Abstimmen des Empfängers über das empfangene Frequenzband,
c) Feststellen, ob die empfangene und wiedergegebene Sendung der Sendung des bestimmten Senders entspricht,
d) Programmieren eines gewünschten Programmplatzes des Empfängers auf den bestimmten Sender und Zuordnen der in dem Kennsignal enthaltenen Kodezahl zu dem Programmplatz.

6. Verfahren nach Anspruch 5, dadurch gekennzeichnet, daß der Abstimmvorgang ein elektronischer Abstimmvorgang (ETC=electronic tuning control) ist.

## Revendications

1. Procédé pour programmer un récepteur de radiodiffusion pour un système dans lequel chaque diffusion est fournie avec un signal d'identification transmis pendant la diffusion et comprenant un numéro de code pour la station émettant ladite diffusion, **caractérisé par** les étapes suivantes :
a) entrée d'un signal d'identification pour une diffusion choisie d'une station d'émission définie,
b) décodage dudit signal d'identification vers ledit numéro de code,
c) accord dudit récepteur jusqu'à ce qu'il reçoive et affiche une diffusion de ladite station d'émission définie, sur un emplacement de programme défini,
d) mise en relation dudit numéro de code de la station d'émission sélectionnée avec ledit emplacement de programme défini.

2. Procédé selon la revendication 1, **caractérisé en ce que** ladite diffusion est affichée sur l'écran d'un récepteur de télévision.

3. Procédé selon la revendication 1, **caractérisé en ce que** ledit récepteur de radiodiffusion est un magnétoscope.

4. Procédé selon la revendication 1, **caractérisé en ce que** ledit processus de mise en relation est réalisé automatiquement en appuyant sur une touche une fois que le récepteur a commencé à afficher ladite diffusion choisie.

5. Procédé pour programmer un récepteur non-programmé sur différentes stations d'émission, **caractérisé par** les étapes suivantes :
a) entrée d'un signal d'identification pour une diffusion d'une station d'émission définie,
b) accord dudit récepteur sur la bande de fréquence reçue,
c) détection de la correspondance entre la diffusion reçue et affichée et la diffusion dudit émetteur défini,
d) programmation d'un emplacement de programme souhaité du récepteur sur ledit émetteur défini et mise en relation du numéro de code compris dans ledit signal d'identification avec l'emplacement de programme.

6. Procédé selon la revendication 5, **caractérisé en ce que** ledit processus d'accord est un processus de contrôle d'accord électronique (ETC).
